# EUROPÄISCHE PATENTANMELDUNG

(11) **EP 2 927 587 A1**
(43) Veröffentlichungstag der Anmeldung: **07.10.2015**
(21) Anmeldenummer: 14002288.0
(22) Anmeldetag: 03.07.2014
(51) Int. Cl.: F23L 7/00, F23L 15/04, C03B 5/235

(54) **Sauerstoff/Luft-Brennstoff-Brennanlage und Verfahren zum Vorwärmen von Verbrennungskomponenten, z.B. für einen Schmelzofen**

(30) Priorität: 01.04.2014 DE 102014004778
(71) Anmelder: Linde Aktiengesellschaft, 80331 München (DE)
(72) Erfinder: Schemberg, Siegfried, 85256 Vierkirchen (DE)
(74) Vertreter: Gellner, Bernd

(57) **Zusammenfassung**

Die Erfindung betrifft eine Sauerstoff- oder Luft-Brennstoff-Brennanlage (200) mit einem Wärmeträgerkreislauf (210) zum Vorwärmen von Verbrennungskomponenten, umfassend Sauerstoff oder Luft und Brennstoff, durch ein Wärmeträgerfluid, mit wenigstens zwei Wärmetauschern, wobei ein erster Wärmetauscher (214) zwischen einem Expander (212), welcher stromaufwärts des ersten Wärmetauschers (214) angeordnet ist, und einem Verdichter (216), welcher stromabwärts des ersten Wärmetauschers (214) angeordnet ist, in einer Abgasquelle (206) der Brennanlage angeordnet ist und dazu ausgebildet ist, Abgaswärme auf das Wärmeträgerfluid zu übertragen, und wobei wenigstens ein weiterer Wärmetauscher (218, 222) in dem Wärmeträgerkreislauf (210) angeordnet und dazu ausgebildet ist, Wärme vom Wärmeträgerfluid auf wenigstens eine der Verbrennungskomponenten zu übertragen.

## Beschreibung

Die vorliegende Erfindung betrifft eine Sauerstoff-Brennstoff- oder Luft-Brennstoff-Brennanlage mit einem Wärmeträgerkreislauf zum Vorwärmen von Verbrennungskomponenten, umfassend Sauerstoff oder Luft und Brennstoff, durch ein Wärmeträgerfluid, mit wenigstens zwei Wärmetauschern, und ein entsprechendes Verfahren.

### Stand der Technik

Das Vorwärmen von Luft als Verbrennungskomponente durch Wärmerückgewinnung aus Ofenabgasen durch rekuperativ oder regenerativ arbeitende Wärmeaustauschsysteme ist Stand der Technik. Hierdurch ist es möglich die Abgasverluste zu reduzieren und den feuerungstechnischen Wirkungsgrad einer Anlage zu erhöhen. Ein weiterer Vorteil der Luftvorwärmung besteht in der Erhöhung der Flammentemperatur, wodurch die Wärmeübertragung (durch Strahlung) erhöht wird und die Leistung des Ofens gesteigert wird.

Viele Hochtemperaturprozesse sind bei Verwendung von Luftbrennern ohne Luftvorwärmung unwirtschaftlich oder gar nicht möglich.

Bei Sauerstoff-Brennstoff-Brennanlagen ist bislang kaum eine Vorwärmung der Verbrennungskomponenten (Sauerstoff und Brennstoff) durchgeführt worden, da der feuerungstechnische Wirkungsgrad solcher Anlagen aufgrund des nicht vorhandenen "Ballast-Stickstoffs" ohnehin wesentlich höher ist.

Dennoch besteht auch für solche Sauerstoff-Brennstoff-Brennanlagen seitens der Genehmigungsbehörden die Forderung nach Mitteln zur Wärmerückgewinnung. Diese konnte jedoch bislang für genannte Anlagen wegen fehlender technischer Ausführbarkeit oder Unwirtschaftlichkeit zurückgewiesen werden.

Aus der WO 2007/023238 A1 ist ein Verfahren zum Vorwärmen von sauerstoffreicher Luft und Brennstoff bekannt. Hierbei wird als Wärmeträgergas Luft durch Abgas erwärmt. Das Wärmeträgergas überträgt seine Wärme mittels Wärmetauscher auf die vorzuwärmende sauerstoffreiche Luft oder den vorzuwärmenden Brennstoff. Solche Verfahren sind jedoch nicht für alle Sauerstoff-Brennstoff-Brennanlagen geeignet, da Rohrleitungen, Wärmetauscher und Armaturen relativ groß ausgelegt werden müssen, um das relativ große Volumen an Luftströmen umzuwälzen. Dadurch wird die Anlage relativ groß und teuer. Des Weiteren sind die Abgastemperatur oder der Wärmeinhalt der Abgase von Sauerstoff-Brennstoff-Brennanlagen oft nicht ausreichend, so dass große Wärmeübertragungsflächen erforderlich werden oder weitere Maßnahmen zur Erhöhung der Temperaturdifferenz zwischen dem Wärmeträgergas und dem Abgas ergriffen werden müssen.

Aus dem Patent US 6,629,413 B1 ist ein Wärmekreislauf für Luft-Brennstoff-Brenner bekannt, mittels welchem Abwärme in elektrische Energie umgewandelt wird. Hierfür wird ein Wärmeträgerfluid zunächst bei niedriger Temperatur verdichtet und in einen Wärmetauscher geleitet, der mit einer Abgasquelle des Ofens im Wärmetausch steht, wodurch sich die Temperatur des Wärmeträgerfluids er-höht. Anschließend wird das Wärmeträgerfluid durch Entspannung abgekühlt. Mit der Entspannungsenergie kann ein Generator betrieben werden.

Mit diesem System ist es jedoch nicht möglich, Verbrennungskomponenten einer Sauerstoff-Brennstoff- oder Luft-Brennstoff-Brennanlage effizient vorzuwärmen, da nur die Restenergie nach der Entspannung des Wärmeträgerfluids zum Vorwärmen der Verbrennungsluft genutzt wird.

Es ist daher wünschenswert, eine Sauerstoff-Brennstoff- oder Luft-Brennstoff-Brennanlage sowie ein Verfahren zum Vorwärmen von Verbrennungskomponenten einer Sauerstoff-Brennstoff- oder Luft-Brennstoff-Brennanlage bereitzustellen, welche die vorstehend beschriebenen Nachteile vermeiden.

### Offenbarung der Erfindung

Die Erfindung schlägt eine Sauerstoff-Brennstoff- oder Luft-Brennstoff-Brennanlage mit einem geschlossenen Wärmeträgerkreislauf vor, wobei ein erster Wärmetauscher in einer Abgasquelle der Brennanlage angeordnet ist. Der erste Wärmetauscher ist weiter zwischen einem Expander, welcher, bezogen auf die Strömungsrichtung des Wärmeträgerfluids, stromaufwärts des ersten Wärmetauschers angeordnet ist, und einem Verdichter, welcher stromabwärts des ersten Wärmetauschers angeordnet ist, angeordnet. Genannter erster Wärmetauscher ist dazu ausgebildet, Abgaswärme auf das Wärmeträgerfluid zu übertragen. Wenigstens ein weiterer Wärmetauscher ist in dem Wärmeträgerkreislauf angeordnet und dazu ausgebildet, Wärme vom Wärmeträgerfluid auf wenigstens eine der Verbrennungskomponenten zu übertragen.

Des Weiteren schlägt die Erfindung ein Verfahren zum Vorwärmen von Verbrennungskomponenten in einer Sauerstoff-Brennstoff- oder Luft-Brennstoff-Brennanlage vor, bei welchem ein Wärmeträgerfluid, um die Temperaturdifferenz zu einer Abgasquelle zu erhöhen, von einer höheren Druckstufe vor seiner Erwärmung entspannt wird und nach seiner Erwärmung wieder verdichtet wird.

### Vorteile der Erfindung

Mit der Erfindung ist es möglich, möglichst viel Abgaswärme aus dem Abgas einer Sauerstoff-Brennstoff- oder Luft-Brennstoff-Brennanlage zu entnehmen und dadurch den Wirkungsgrad der Anlage zu erhöhen.

Der Expander ist dazu ausgebildet, das Wärmeträgerfluid abzukühlen (Joule-Thomson-Effekt) und somit die Temperaturdifferenz zwischen Wärmeträgerfluid und Abgas zu erhöhen. Auf den Expander folgt der erste Wärmetauscher in der Abgasquelle der Sauerstoff-Brennstoff- oder Luft-Brennstoff-Brennanlage. Der nachfolgende Verdichter ist dazu ausgebildet, die Temperatur des Wärmeträgerfluids nach seiner Erwärmung durch das Abgas weiter zu erhöhen. Wenigstens ein weiterer Wärmetauscher ist dazu ausgebildet, Wärme vom verdichteten Wärmeträgerfluid auf wenigstens eine der Verbrennungskomponenten Sauerstoff oder Luft und Brennstoff zu übertragen.

Durch den Einsatz des Expanders und Verdichters ist die erfindungsgemäße Anlage insbesondere für niedrige Abgastemperaturen mit weniger als 800 °C oder auch geringere Abgasmengen an kleineren Brennanlagen verwendbar.

Unter einer "Sauerstoff-Brennstoff- (oder Luft-Brennstoff-) Brennanlage" wird eine Anlage zur Verbrennung von Sauerstoff (oder Luft) und Brennstoff verstanden, welche zumindest einen Ofen, wenigstens einen Brenner sowie Abgasleitungen und/oder Abgasrohre umfasst.

Eine "Abgasquelle" kann beispielsweise als Abgasleitung oder Abgasrohr ausgebildet sein. Der Begriff schließt insbesondere Verzweigungen von Abgasleitungen und Abgasbehälter, in welche Abgasluft geleitet wird, mit ein.

Unter "Sauerstoff" wird ein Gas mit einem Sauerstoffgehalt von wenigstens 90 % oder reiner Sauerstoff verstanden.

Die Angaben "stromabwärts" bzw. "stromaufwärts" beziehen sich auf die Strömungsrichtung des Wärmeträgerfluids.

Die beschriebene Reihenfolge der Elemente Expander, erster Wärmetauscher und Verdichter ist besonders vorteilhaft, um einen Wärmepumpeneffekt zu erzielen. Durch die Abkühlung des Wärmeträgerfluids im Expander wird die Wärmeübertragung im Wärmetauscher verbessert. Die eingangs erwähnte Patentschrift US 6629413 B1 offenbart zwar bereits einen Wärmeträgerkreislauf mit einem ersten Wärmetauscher, einem Verdichter und einem Expander, die jedoch bezogen auf die Strömungsrichtung des Wärmeträgerfluids in dem erfindungsgemäßen Wärmeträgerkreislauf in entgegengesetzter Richtung angeordnet sind. Zudem ist dieser Wärmeträgerkreislauf dazu bestimmt, Wärmeenergie in elektrische Energie umzuwandeln.

Besonders vorteilhaft ist die Anordnung des ersten Wärmetauschers in einer Isolierschicht der Abgasquelle. Hierdurch kann das Wärmeträgerfluid vor Verunreinigungen geschützt werden.

Bei größeren Abgasmengen ist es zweckmäßig, den ersten Wärmetauscher in einer separaten Kammer oder einem Rekuperator auszubilden.

Alternativ kann der Wärmetauscher auch direkt in der Abgasquelle ausgebildet sein.

Insbesondere können bei einer erfindungsgemäßen Sauerstoff-Brennstoff- oder Luft-Brennstoff-Brennanlage Rohrleitungen, Wärmetauscher und Apparaturen deutlich kleiner als bisher dimensioniert werden. Dies spart Kosten und Material. Zudem kann ein entsprechender Wärmeträgerkreislauf wegen des relativ geringen Raumbedarfs auch in bestehende Sauerstoff-Brennstoff- oder Luft-Brennstoff-Brennanlagen nachgerüstet werden.

Die kompakte Dimensionierung von Rohrleitungen und Wärmetauschern ermöglicht es außerdem, einen solchen Wärmeträgerkreislauf in einer Sauerstoff-Brennstoff- oder Luft-Brennstoff-Brennanlage mit mehreren Brennern einzubringen.

Die Verwendung von CO2 oder Argon anstelle von Luft als Wärmeträgerfluid ist aufgrund der wesentlich höheren Joule-Thomson-Koeffizienten und der insbesondere für CO2 deutlich höheren Inversionstemperatur besonders vorteilhaft. Durch die Verwendung von CO2 oder Argon besteht im Falle von Leckagen keine Gefahr von Entzündungen des Brenngases im Wärmetauscher oder in den Rohrleitungen.

Des Weiteren können aufgrund der günstigen Stoffeigenschaften von CO2, wie Dichte, spezifische Wärmekapazität, Wärmeleitfähigkeit und dynamische Viskosität, gegenüber dem Wärmeträgerfluid Luft um ein vielfaches bessere Wärmeübertragungskoeffizienten erreicht werden.

Insbesondere bei der Verwendung von CO2 als Wärmeträgerfluid und einer Verdichtung des Wärmeträgerfluids auf wenigstens 6 bar werden mindestens fünffach bessere Wärmeübertragungskoeffizienten gegenüber Luft erzielt. Höhere Druckstufen steigern die Effizienz des Gesamtsystems. Ein Wärmeträgerkreislauf kann jedoch auch für Drücke von beispielsweise 40 bar ausgelegt sein.

Es ist besonders zweckmäßig, zur Wärmeübertragung auf die Verbrennungskomponenten Sauerstoff oder Luft und Brennstoff zwei weitere Wärmetauscher zu verwenden. Somit können sowohl Sauerstoff oder Luft als auch Brennstoff vorgewärmt werden.

Bezüglich des erfindungsgemäßen Verfahrens sei auf die obigen Ausführungen verwiesen, die für das Verfahren ebenso Gültigkeit besitzen.

Es ist besonders vorteilhaft, das erfindungsgemäße Verfahren zum Vorwärmen von Sauerstoff oder Luft und Brennstoff, insbesondere Erdgas oder LPG (Liquified Petroleum Gas), einzusetzen.

Das Wärmeträgerfluid wird durch den Expander zunächst auf eine möglichst niedrige Temperatur abgekühlt, um eine möglichst große Temperaturdifferenz zwischen dem Wärmeträgerfluid und dem Abgas zu erzeugen. Hierbei ist der Betrieb des Wärmeträgerkreislaufes bei höheren Drücken (> 40 bar) hilfreich, um den Joule-Thomson Effekt bei der Entspannung besser nutzen zu können.

Sinnvollerweise sollte die Temperaturdifferenz zwischen dem entspannten Wärmeträgerfluid und der Abgastemperatur mindestens 200 °C betragen, damit das Wärmeträgerfluid hinreichend viel Wärmeenergie im ersten Wärmetauscher aus dem Abgas aufnehmen kann.

Durch die Erwärmung im ersten Wärmetauscher und den anschließenden Verdichter wird das Wärmeträgerfluid sodann auf eine Temperatur von vorzugsweise 400 °C bis 800 °C, insbesondere ca. 600 °C erwärmt. In separaten Wärmetauschern erwärmt das Wärmeträgerfluid dann die Verbrennungskomponenten Sauerstoff oder Luft und Brennstoff auf 200 °C bis 500 °C, insbesondere auf 350 °C bis 450 °C, weiter insbesondere auf bis zu etwa 400 °C.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

Figur 1 zeigt eine Sauerstoff-Brennstoff-Brennanlage mit Mitteln zum Vorwärmen von Verbrennungskomponenten gemäß dem Stand der Technik in einer schematischen Schnittansicht.
Figur 2 zeigt eine schematische Zeichnung einer erfindungsgemäßen Sauer-stoff-Brennstoff-Brennanlage.

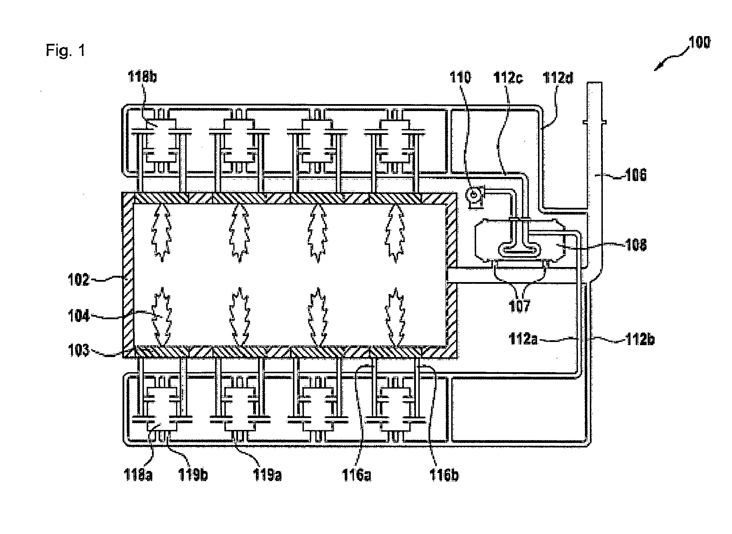

Figur 1 zeigt eine Sauerstoff-Brennstoff-Brennanlage 100 mit einer Vielzahl von Wärmetauschern zum Vorwärmen von Verbrennungskomponenten gemäß dem Stand der Technik in einer schematischen Darstellung. Die Sauerstoff-Brennstoff-Brennanlage 100 umfasst einen Ofen 102 mit acht Brennern 103 und Flammen 104 und einem Abgasrohr 106. Vom Abgasrohr 106 führen zwei Zuleitungen 107 zu einem Wärmetauscher 108. Der Wärmetauscher 108 ist mit einer Absaugeinrichtung 110 für Umgebungsluft durch eine Zuleitung verbunden und ist dazu ausgebildet, Abgaswärme auf Luft als Wärmeträgermedium zu übertragen. Die erwärmte Umgebungsluft wird über eine Rohrleitung 112a zu weiteren Wärmetauschern 118a transportiert. Dabei ist vor jedem Brenner 103 jeweils ein Wärmetauscher 118a angeordnet. Für die Erwärmung verschiedener Verbrennungskomponenten, zum Beispiel Erdgas und Sauerstoff, verlaufen durch jeden Wärmetauscher 118a zwei Leitungen 119a und 119b, durch welche verschiedene Verbrennungskomponenten gesondert vorgewärmt werden können. Nach ihrer Vorwärmung werden die Verbrennungskomponenten durch Zuleitungen 116a und 116b zu den Brennern 103 transportiert. Hierbei sind wieder jedem Brenner jeweils ein Zuleitung 116a und 116b für jeweils eine Verbrennungskomponente zugeordnet. Nachdem die Luft ihre Wärme in einem der Wärmetauscher 118a abgegeben hat, wird sie über die Rohrleitung 112b zurück in das Abgasrohr 106 geleitet.

Analoges gilt für die Wärmetauscher 118b, die Zuleitung 112c sowie die Leitung 112d zurück zum Abgasrohr 106. Genannte Elemente sind auf der anderen Seite des Ofens, symmetrisch zur vorstehend beschriebenen Anordnung, angeordnet.

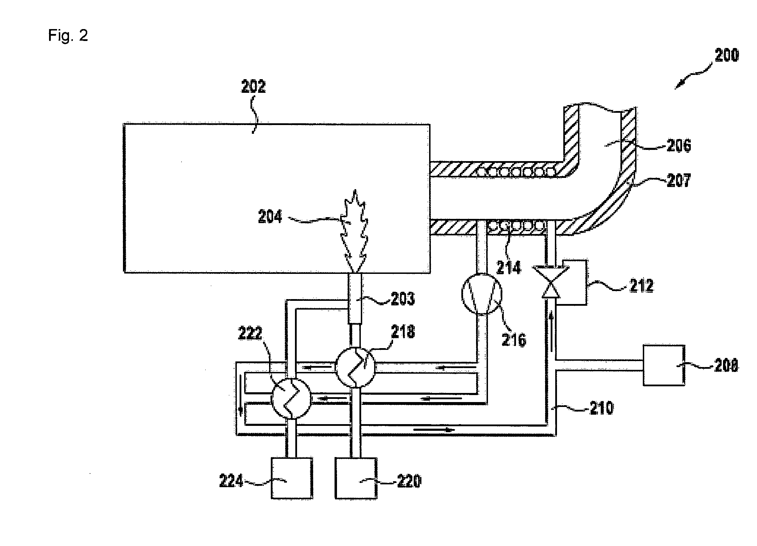

In Figur 2 ist der Aufbau einer erfindungsgemäßen Sauerstoff-Brennstoff-Brennanlage zu sehen. Die Anlage weist einen Ofen 202 mit einem schematisch dargestellten Brenner 203 auf. In der Praxis kann eine Sauerstoff-Brennstoff-Brennanlage mehrere Brenner enthalten. Im Betrieb der Sauerstoff-Brennstoff-Brennanlage erzeugt der Brenner 203 die Flamme 204. Es sei darauf hingewiesen, dass die Flamme 204 bei einer flammenlosen Oxidation auch entfallen kann.

An den Ofen 202 ist ein Abgasrohr 206 angeschlossen. Abhängig von der Abgastemperatur kann das Abgasrohr 206 innen mit einer Isolationsschicht 207 ausgekleidet sein.

Die erfindungsgemäße Sauerstoff-Brennstoff-Brennanlage weist neben der konventionellen Brennanlage einen Wärmeträgerkreislauf 210 auf. Durch den Wärmeträgerkreislauf strömt ein Wärmeträgerfluid. An den Wärmeträgerkreislauf können ein oder mehrere Druckbehälter 208 für eine Nachspeisung mit Wärmeträgerfluid angeschlossen sein. Beispielsweise kann jeweils ein Druckbehälter für verschiedene Wärmeträgerfluide, insbesondere CO2, Argon oder Luft, ausgebildet sein, um diese zu wechseln, zu mischen oder einen Verlust von Wärmeträgerfluid durch Leckagen auszugleichen.

Die Strömungsrichtung, in die sich das Wärmeträgerfluid im Wärmeträgerkreislauf bewegt, ist in der Figur 2 durch Pfeile angegeben. Dementsprechend wird das Wärmeträgerfluid zunächst vom Expander 212 entspannt und somit abgekühlt. Die Abkühlung im Expander richtet sich nach der im System eingestellten Druckstufe und dem Joule-Thompson Koeffizienten des Wärmeträgerfluids. Hierdurch erhöht sich insbesondere die Differenz der Temperatur des Wärmeträgerfluids zur Abgastemperatur. Anschließend wird die Wärme des Abgases in einem ersten Wärmetauscher 214 auf das Wärmeträgerfluid übertragen.

Im vorliegenden Ausführungsbeispiel ist der Wärmetauscher 214 zum Schutz vor Ablagerungen auf den Wärmetauscherflächen innenliegend im Abgasrohr innerhalb der Isolationsschicht ausgebildet.

Bei größeren Abgasmengen oder größeren Abgasrohrdurchmessern kann es jedoch vorteilhaft sein, einen Teil des Abgases einem gesonderten Rekuperator zuzuführen, wie dies in entsprechenden Abgassystemen nach Glasschmelzwannen zur Vorwärmung der Verbrennungsluft geschieht (s. Figur 1).

Ist das Abgas weitestgehend frei von Stäuben, so dass keine Gefahr von Verschmutzungen oder Ablagerungen auf den Wärmeaustauscherflächen besteht, kann der Wärmetauscher auch innenliegend im Abgasrohr angeordnet werden.

Anschließend wird das Wärmeträgerfluid in einem Verdichter 216 verdichtet und somit weiter erwärmt. Sind am Expander 212 größere Energiemengen abgefallen, ist es möglich, diese Energie beispielsweise zum Antrieb des Verdichters 216 zu nutzen. Das Wärmeträgerfluid hat nach der Verdichtung eine Temperatur von ca. 600 °C.

Die gewonnene Wärmeenergie gibt das Wärmeträgerfluid in einem zweiten Wärmetauscher 218 an die Verbrennungskomponente Sauerstoff sowie in einem dritten Wärmetauscher 222 an die Verbrennungskomponente Brennstoff, zum Beispiel Erdgas, ab. Die Sauerstoffversorgung erfolgt über einen Tank 220, die Brennstoffversorgung erfolgt im Ausführungsbeispiel über einen weiteren Tank 224. Es ist auch möglich den Brennstoff aus einem Gasversorgungsnetz zu beziehen. Die vorgewärmten Verbrennungskomponenten haben vor ihrer Entzündung im Ofen eine Temperatur von ca. 400 °C.

### Bezugszeichenliste

- 100: Sauerstoff-Brennstoff-Brennanlage gemäß dem Stand der Technik
- 102: Ofen
- 103: Brenner
- 104: Flamme
- 106: Abgasrohr
- 107: absaugende Zuleitungen
- 108: Wärmetauscher
- 110: Absaugeinrichtung
- 112a: Rohrleitung
- 112b: Rohrleitung
- 112c: Rohrleitung
- 112d: Rohrleitung
- 116: Zuleitungen
- 118a: Wärmetauscher
- 118b: Wärmetauscher
- 119a: Leitung
- 119b: Leitung

- 200: erfindungsgemäße Sauerstoff-Brennstoff-Brennanlage
- 202: Ofen
- 203: Brenner
- 204: Flamme
- 206: Abgasrohr
- 207: Isolationsschicht
- 208: Druckbehälter für Wärmeträgerfluid
- 210: Wärmeträgerkreislauf
- 212: Expander
- 214: erster Wärmetauscher
- 216: Verdichter
- 218: zweiter Wärmetauscher
- 220: Sauerstofftank
- 222: dritter Wärmetauscher
- 224: Brennstofftank

## Patentansprüche

1. Sauerstoff- oder Luft-Brennstoff-Brennanlage (200) mit einem Wärmeträgerkreislauf (210) zum Vorwärmen von Verbrennungskomponenten, umfassend Sauerstoff oder Luft und Brennstoff, durch ein Wärmeträgerfluid, mit wenigstens zwei Wärmetauschern,
wobei ein erster Wärmetauscher (214) zwischen einem Expander (212), welcher stromaufwärts des ersten Wärmetauschers (214) angeordnet ist, und einem Verdichter (216), welcher stromabwärts des ersten Wärmetauschers (214) angeordnet ist, in einer Abgasquelle (206) der Brennanlage angeordnet ist und dazu ausgebildet ist, Abgaswärme auf das Wärmeträgerfluid zu übertragen, und wobei wenigstens ein weiterer Wärmetauscher (218) in dem Wärmeträgerkreislauf (210) angeordnet und dazu ausgebildet ist, Wärme vom Wärmeträgerfluid auf wenigstens eine der Verbrennungskomponenten zu übertragen.

2. Sauerstoff- oder Luft-Brennstoff-Brennanlage nach Anspruch 1 , wobei das Wärmeträgerfluid CO2, Luft oder Argon ist.

3. Sauerstoff- oder Luft-Brennstoff-Brennanlage nach einem der vorstehenden Ansprüche, wobei der Verdichter (216) derart ausgelegt ist, dass das Wärmeträgerfluid nach seiner Verdichtung einen Druck von wenigstens 6 bar aufweist.

4. Sauerstoff- oder Luft-Brennstoff-Brennanlage nach einem der vorstehenden Ansprüche, wobei der wenigstens eine weitere Wärmetauscher ein zweiter Wärmetauscher (218) zur Vorwärmung von Sauerstoff und/oder ein dritter Wärmetauscher (222) zur Vorwärmung von Brennstoff ist.

5. Verfahren zum Vorwärmen von Verbrennungskomponenten in einer Sauerstoff-oder Luft-Brennstoff-Brennanlage (200), wobei ein Wärmeträgerfluid in einem ersten Schritt in einem ersten Wärmetauscher (214), welcher in einer Abgasquelle (206) der Brennanlage angeordnet ist, erwärmt wird und in einem zweiten Schritt in wenigstens einem weiteren Wärmetauscher (218) Wärme an die Verbrennungskomponenten abgibt, **dadurch gekennzeichnet, dass** das Wärmeträgerfluid, um die Temperaturdifferenz zur Abgasquelle (206) zu erhöhen, vor seiner Erwärmung entspannt wird und nach seiner Erwärmung verdichtet wird.

6. Verfahren nach Anspruch 5, **dadurch gekennzeichnet, dass** als Verbrennungskomponenten Sauerstoff oder Luft und Brennstoff verwendet werden.

7. Verfahren nach einem der Ansprüche 5 oder 6, **dadurch gekennzeichnet, dass** als Wärmeträgerfluid CO2, Luft oder Argon verwendet wird.

8. Verfahren nach einem der Ansprüche 5 bis 7, **dadurch gekennzeichnet, dass** das Wärmeträgerfluid auf einen Druck von wenigstens 6 bar verdichtet wird.

9. Verfahren nach einem der Ansprüche 5 bis 8, **dadurch gekennzeichnet, dass** wenigstens eine der Verbrennungskomponenten auf eine Temperatur von 200 °C bis 500 °C vorgewärmt wird.

10. Verfahren nach einem der Ansprüche 5 bis 9, **dadurch gekennzeichnet, dass** das Wärmeträgerfluid durch Erwärmung in der Abgasquelle (206) und Verdichtung auf eine Temperatur von 400 °C bis 800 °C erwärmt wird.
